# EUROPÄISCHE PATENTSCHRIFT

(11) **EP 1 811 289 B1**
(45) Veröffentlichungstag und Bekanntmachung des Hinweises auf die Patenterteilung: **23.02.2011**
(21) Anmeldenummer: 06025178.2
(22) Anmeldetag: 06.12.2006
(51) Int. Cl.: G01N 21/90, B65G 47/24, B65G 15/14

(54) **Verfahren sowie Vorrichtung zur Inspektion von Flaschen oder dgl. Behälter**
Method and apparatus for the inspection of bottles or similar containers
Procédé et appareil d'inspection de bouteilles et récipents similaires

(30) Priorität: 19.01.2006 DE 102006002633
(43) Veröffentlichungstag der Anmeldung: 25.07.2007
(73) Patentinhaber: KHS GmbH, Juchostrasse 20 44143 Dortmund (DE)
(72) Erfinder: Varhaniovsky, Gyula, 45731 Waltrop (DE)

(56) Entgegenhaltungen:
- EP-A- 0 871 028
- WO-A-01/44791
- DE-U1- 29 617 281
- US-A- 4 209 802
- US-A- 5 067 616
- US-B1- 6 308 823

## Beschreibung

Die Erfindung bezieht sich auf ein Verfahren gemäß Oberbegriff Patentanspruch 1 sowie auf eine Vorrichtung gemäß Oberbegriff Patentanspruch 15.

Vorrichtungen zum Inspizieren von Flaschen, bei denen die Flaschen mit einem Transportelement an wenigstens einer Inspektionsstation oder einem Inspektionsmodul vorbeibewegt werden und die Inspektion optisch-elektrisch erfolgt, und zwar unter Verwendung wenigstens einer Lichtquelle und wenigstens einer optoelektrischen Sensoreinheit, z.B. eines optoelektrischen Detektors oder einer Kamera, sind in verschiedenen Ausführungen bekannt.

Bekannt ist dabei insbesondere auch, die zunächst aufrecht stehend einem Behältereinlauf einer Transportstrecke zugeführten Flaschen oder Behälter geschwenkt an einer Inspektionsstation oder einem Inspektionsmodul vorbeizubewegen (US 4,209,802, EP 0 655 621 A1, FR 2 746 502 A1). Bei einem solchen Verfahren zur Inspektion von Flaschen bzw. bei einer entsprechenden Vorrichtung ist aus WO01/44791 speziell auch bekannt, als Transportelement der Transportstrecke zwei jeweils eine geschlossene Schlaufe bildende und endlos umlaufend angetriebene Transportbänder zu verwenden, die mit einander zugewandten Schlaufen - oder Transportbandlängen die Transportstrecke bilden, auf der die Flaschen dann zwischen den Transportbändern durch Klemmsitz gehalten in Transportrichtung bewegt werden. Für das Schwenken der Flaschen sind die Transportbänder an Führungen derart geführt, dass sich unter Verwinden der Transportbänder die Orientierung, die die von den Außenflächen der Schlaufen gebildete Behälteranlage- oder Klemmflächen aufweisen, sich dem Schwenken der Flaschen entsprechend entlang der Transportstrecke ändert.

Aufgabe der Erfindung ist es, ein Verfahren aufzuzeigen, das in besonders zuverlässiger Weise eine Inspektion von Flaschen oder dergleichen Behältern aus einem transluzenten bzw. durchsichtigen Werkstoff (z.B. aus Glas oder einem transluzenten Kunststoff, beispielsweise PET) auch an kritischen Behälterbereichen ermöglicht. Zur Lösung dieser Aufgabe ist ein Verfahren entsprechend dem Patentanspruch 1 ausgebildet. Eine Vorrichtung zum Inspizieren von Flaschen oder dergleichen Behälter ist Gegenstand des Patentanspruchs 15.

Die Behälter werden während des Transports mit dem von den Transportbändern gebildeten Transportelement der Vorrichtung aus einer zunächst aufrechten Behälterlage, d.h. aus einer Behälterlage, in der die Behälter mit ihrer Behälterachse in vertikaler Richtung orientiert sind und in der die Behälter der Vorrichtung zugeführt werden, für die Inspektion derart geneigt oder geschwenkt, dass die geneigten Behälter mit ihrer Behälterachse zwar in einer Ebene senkrecht zur Transportrichtung liegen, die Behälterachse aber einen Winkel mit der Vertikalen einschließt. Nach der Inspektion bzw. nach dem Passieren der wenigstens einen Inspektionsstation oder der in Transportrichtung letzten Inspektionsstation werden die Behälter auf der Transportstrecke wieder in ihre aufrechte Behälterlage zurückgeschwenkt.

Durch die Schrägstellung der Behälter während der Inspektion bzw. während des Passierens der wenigstens einen Inspektionsstation ist es u. a. möglich, kritische Bereiche der Behälter, beispielsweise den Übergang zwischen einem Behälterboden und einer Behälterumfangswand zuverlässig zu inspizieren. Weiterhin ist es durch die Schrägstellung auch möglich, in den zunächst leeren Behälter für die Inspektion eine Flüssigkeit, beispielsweise Testflüssigkeit (z.B. steriles Wasser) einzubringen, die vor der Inspektion im Behälter eventuell vorhandene Fremdstoffe oder Fremdkörper aufnimmt und/oder mitführt und die sich dann durch die Schrägstellung am Übergang zwischen Behälterboden und Behälterumfangswand sammelt. Beim Passieren der wenigstens einen Inspektionsstation oder des wenigstens einen Inspektionsmoduls kann die Flüssigkeit dann auf eventuelle Fremdstoffe oder Fremdkörper, beispielsweise auch optoelektrisch getestet oder analysiert werden. Da durch die Schrägstellung nur eine geringe Menge an Flüssigkeit erforderlich ist und somit eventuelle Fremdstoffe in erhöhter Konzentration in der Flüssigkeit enthalten sind, sind eindeutige Ergebnisse erreichbar.

Weiterbildungen der Erfindung sind Gegenstand der Unteransprüche. Die Erfindung wird im Folgenden anhand der Figuren an einem Ausführungsbeispiel näher erläutert. Es zeigen:
- Fig. 1: in vereinfachter Darstellung und in Draufsicht eine Vorrichtung zur Inspektion von Flaschen;
- Fig. 2: in schematischer und perspektivischer Darstellung einen Transporteur oder ein Transportelement der Vorrichtung der Figur 1;
- Fig. 3 - 5: Schnitte entsprechend den Linien I-I, II-II bzw. III-III der Figur 1, jeweils mit am Transportelement angeordneten Flaschen;
- Fig. 6: in vergrößerter Darstellung ein Detail der Figur 5 im Bereich eines Inspektionsmoduls.

Die in den Figuren allgemein mit 1 bezeichnete Vorrichtung dient zur Inspektion von Flaschen 2 aus einem transluzenten Werkstoff, und zwar bei der dargestellten Ausführungsform speziell zur Inspektion von Kunststoff-Flaschen bzw. PET-Flaschen mit einem der Flaschenmündung 2.1 gegenüberliegenden an der Flaschenaußenseite konkav gewölbten Boden 2.2.

Die Flaschen 2 werden der Vorrichtung 1 über einen in geeigneter Weise ausgebildeten Transporteur 3 als einspurige Flaschenreihe aufrechtstehend, d. h. mit ihrer Flaschenachse FA in vertikaler Richtung orientiert, in Transportrichtung A zugeführt. Nach der Inspektion gelangen die Flaschen 2 wiederum aufrechtstehend auf einen Transporteur 4, über welchen die Flaschen 2 einer weiteren Verwendung zugeführt werden, und zwar unter Ausschleusung solcher Flaschen, die bei der Inspektion wegen in der Flasche vorhandener Fremdkörper, Fremdstoffe usw. als schlecht beanstandet wurden.

Ein zentrales Element der Vorrichtung 1 ist ein Transportelement 5, das u. a. zwei endlos umlaufend angetriebene bzw. jeweils eine geschlossene Schlaufe bildende gurtartige Transportbänder 6 und 7 aufweist und eine Transportstrecke 8 bildet, auf der die Flaschen 2 in Transportrichtung A unter Festklemmen zwischen den beiden Transportbändern 5 und 6 bewegt werden und die mit einem Behältereinlauf 8.1 an den äußeren Transporteur 3 anschließt und auf die an einem Behälterauslauf 8.2 der äußere Transporteur 4 folgt. Bei der dargestellten Ausführungsform sind die Transporteure 3 und 4 sowie die Transportstrecke 8 bezüglich ihrer Transportrichtung A in einer Linie angeordnet.

Das Transportband 6 ist im Bereich des Behältereinlaufs 8.1 über ein Umlenkrad 9 und im Bereich des Behälterauslaufs über ein angetriebenes Rad 10 geführt, sodass es Transportbandlänge 6.1 an einer Seite der Transportstrecke 8 angeordnet ist. Mit einer der Transportstrecke 8 entfernt liegenden Länge 6.2 ist das Transportband 6 über zwei Umlenk- oder Spannrollen 11 geführt.

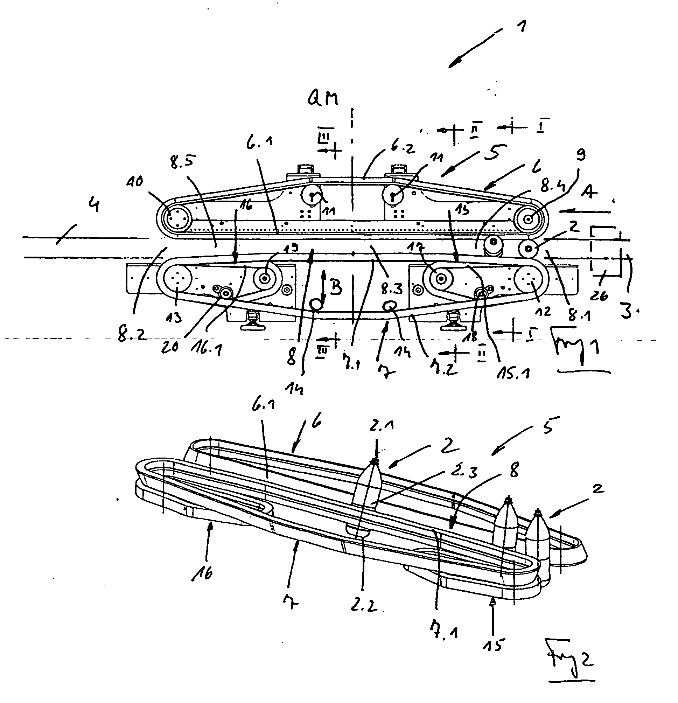

Das Transportband 7 ist in äquivalenter Weise im Bereich des Behältereinlaufs 8.1 über ein Umlenkrad 12 und im Bereich des Behälterauslaufs 8.2 über ein angetriebenes Rad 13 geführt, sodass es mit einer Transportbandlänge 7.1 an der anderen Seite der Transportstrecke 8 befindet und sich über die gesamte Länge der Transportstrecke 8 erstreckt. Durch nicht näher dargestellte Führungsmittel, beispielsweise in Form von Gleitführungen oder zusätzlichen Rollen ist die Länge 7.1 nicht geradlinig verlaufend ausgebildet, sondern weist einen Verlauf in der Weise auf, dass sich bei der für die Figur 1 gewählten Darstellung der Abstand der Länge 7.1 von der Länge 6.1 vom Behältereinlauf 8.1 in Transportrichtung A zunächst verringert, dann in einem mittleren Abschnitt der Transportstrecke 8 konstant ist und sich anschließend wieder zum Behälterauslauf 8.1 hin geringfügig verbreitert. Die Transportstrecke 8 bildet somit drei Abschnitte, nämlich einen mittleren Abschnitt 8.3 mit einem im Wesentlichen gleich bleibenden Abstand zwischen den beiden Transportbandlängen 6.1 und 7.1, einen Abschnitt 8.4, auf dem sich dieser Abstand ausgehend von dem Behältereinlauf 8.1 in Richtung zum mittleren Abschnitt 8.3 hin verringert, und einen Abschnitt 8.5, auf dem sich der Abstand zwischen den Transportbandlängen 6.1 und 7.1 ausgehend vom Ende des mittleren Abschnittes 8.3 in Richtung zum Behälterauslauf 8.2 wieder vergrößert.

Die der Transportstrecke 8 entfernt liegende Länge 7.2 des Transportbandes 7 ist wieder über zwei Umlenk- oder Spannrollen 14 geführt. Sämtliche Räder und Rollen 9 - 11 und 12 - 14 sind mit ihren Achsen in vertikaler Richtung orientiert. Die Transportbänder 6 und 7 sind insbesondere auch im Bereich ihrer Längen 6.1, 6.2 bzw. 7.1, 7.2 hochkant angeordnet.

Wie die Figuren 2 - 5 zeigen, besitzen die Transportbänder 6 und 7 einen Querschnitt in der Form, dass jedes Transportband an der Innenseite seiner Schlaufe eine Innenfläche ausweist, die senkrecht zur Umlaufrichtung des Transportbandes 6 bzw. 7 in vertikaler Richtung oder annähernd in vertikaler Richtung orientiert ist, während die die Außenseite der jeweiligen Schlaufe bildende Außenfläche oder Behälterklemmfläche der Transportbänder 6 und 7 senkrecht zur Umlaufrichtung der Transportbänder bzw. senkrecht zur Transportrichtung A gegenüber der Vertikalen geneigt ist. Hierdurch schließt die Außenfläche des Transportbandes 6 an der Transportbandlänge 6.1 einen Winkel α < 45°, beispielsweise einen Winkel in der Größenordnung zwischen 20 und 25° mit der Vertikalen ein, der sich nach oben hin öffnet. Die Außenfläche des Transportbandes 7 insbesondere auch auf der Länge 7.1 schließt mit der Vertikalen einen Winkel β ein, der gleich oder in etwa gleich dem Winkel α ist, sich aber nach unten hin öffnet, sodass die beiden Transportbänder 6 und 7 mit den Außenflächen ihrer Längen 6.1 und 7.1 beidseitig von der Transportstrecke 8 parallel oder im Wesentlichen parallel zueinander angeordnet sind, die Mittelebene zwischen diesen Außenflächen aber gegenüber der Vertikalen im Winkel α geneigt ist. Im Bereich des Behältereinlaufs 8.1 und auch des Behälterauslaufs 8.2 ist unter dem Transportband 7 jeweils ein Stütz- oder Hilfsband 15 bzw. 16 vorgesehen. Beide Stützbänder sind jeweils als endlos umlaufende bzw. eine geschlossene Schlaufe bildende Bänder ausgebildet. Das Stützband 15 ist im Bereich des Behältereinlaufs 8.1 über ein in den Figuren nicht dargestelltes Umlenkrad geführt, das bei der für die Figur 1 gewählten Darstellung unterhalb des Umlenkrades 12 und mit diesem antriebsmäßig verbunden vorgesehen ist und außerdem denselben Durchmesser wie das Umlenkrad 12 aufweist. Weiterhin ist das Stützband 15 über ein Umlenkrad 17 und eine Spannrolle18 geführt, und zwar derart, dass das Stützband 15 eine Länge 15.1 bildet, die sich ausgehend von dem Behältereinlauf 8.1 etwa bis an den Beginn des mittleren Abschnittes 8.3 der Förderstrecke 8 erstreckt. Sämtliche Räder und Rollen des Stützbandes 15 sind mit ihren Achsen wiederum in vertikaler Richtung orientiert.

Das Stützband 16 ist bezogen auf eine senkrecht zur Transportrichtung A orientierte vertikale Quermittelebene QM spiegelsymmetrisch zum Stützband 15 angeordnet und ausgebildet, d. h. das endlos umlaufend antreibbare bzw. eine geschlossene Schlaufe bildende Stützband 16 ist im Bereich des Behälterauslaufs 8.2 über ein unterhalb des Rades 13 angeordnetes und antriebsmäßig mit dem Rad 13 verbundenes Rad sowie über ein Umlenkrad 19 und eine Spannrolle 20 geführt, und zwar derart, dass sich das Stützband 16 mit der Länge 16.1 an der Seite des Abschnittes 8.5 der Transportstrecke 8 ausgehend von dem Ende des mittleren Bereichs 8.3 bis an den Behälterauslauf 8.2 erstreckt. Bei der dargestellten Ausführungsform ist auch das Transportelement 5 insgesamt spiegelsymmetrisch zu der Quermittelebene QM ausgebildet. Die beiden Transportbänder 6 und 7 sind synchron derart angetrieben, dass sich die Transportbandlänge 6.1 und 7.1 in Transportrichtung A mit gleicher Geschwindigkeit bewegen. Weiterhin sind die Stützbänder 15 und 16 so angetrieben, dass sich deren Längen 15.1 und 16.1 jeweils gleichsinnig und mit gleicher Geschwindigkeit mit der Transportbandlänge 7.1 bewegen.

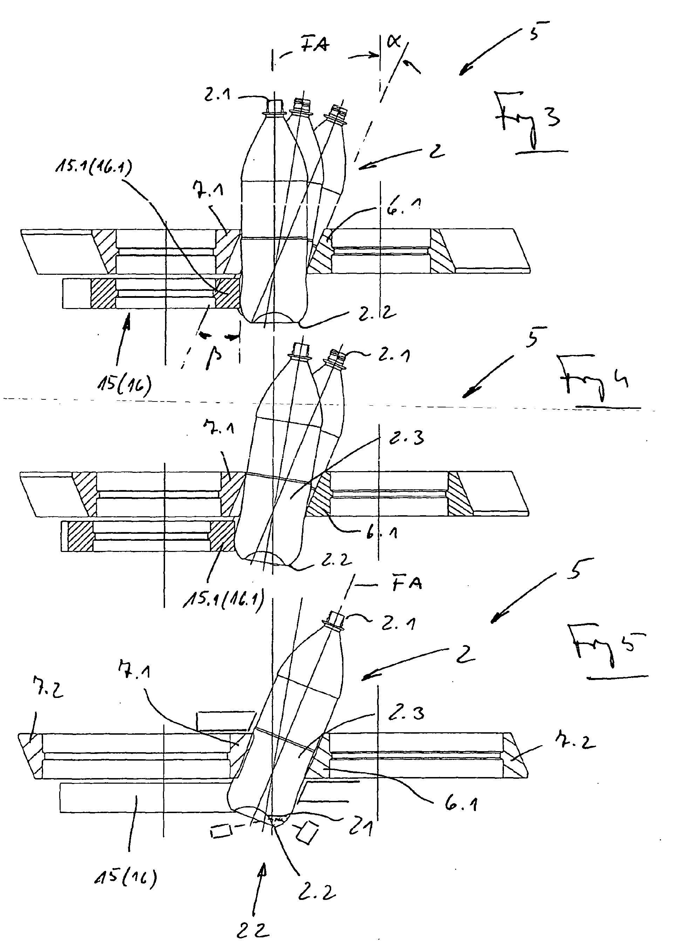

Wie in der Figur 3 dargestellt, werden die Flaschen 2 am Behältereinlauf 8.1 von der Transportstrecke 3 an die Transportstrecke 8 derart übergeben, dass jede Flasche 2 zwischen dem unteren Längsrand der Transportbandlänge 6.1 auf der einen Seite der Transportstrecke 8 und zwischen dem oberen Längsrand der Transportbandlänge 7.1 sowie von der Stützbandlänge 15.1 an der anderen Seite der Transportstrecke 8 im Bereich des Flaschenrumpfes 2.3 durch Klemmsitz gehalten ist, und zwar derart, dass die Flaschen 2 zunächst weiterhin mit ihrer Flaschenachse FA in vertikaler Richtung orientiert mit ihrem Boden 2.2 über das Transportelement 5 bzw. über die Ebene der Unterseite des Stützbandes 15 bzw. der von diesem Stützband gebildeten Schlaufe vorstehen.

Beim Bewegen der Flaschen 2 auf dem Abschnitt 8.4 erfolgt durch den Verlauf der Transportbandlänge 6.1 ein zunehmendes Neigen oder Schrägstellen der Flaschen 2, und zwar dadurch, dass jede Falsche 2 an ihrem Rumpfbereich 2.3 weiterhin zwischen dem unteren Rand der Transportbandlänge 6.1, einerseits und dem oberen Rand der Transportbandlänge 7.1 und der Stützbandlänge 15.1, andererseits eingespannt ist, sich der Abstand der Transportbandlänge 7.1 von der Transportbandlänge 6.1 in Transportrichtung A zunehmend verringert. Bei Erreichen des mittleren Abschnittes 8.3 ist jede Flasche 2 dann nur noch zwischen den beiden Transportbandlängen 6.1 und 7.1 bzw. deren schrägen Außenflächen am Flaschenrumpf 2.3 eingespannt, sodass jede Flasche 2 entlang des mittleren Bereichs 8.3 in der geneigten Stellung transportiert wird, in der die Flaschenachse FA zwar in einer senkrecht zur Transportrichtung A angeordneten Ebene liegt, mit der Vertikalen aber den Winkel α einschließt.

Nach dem Passieren des mittleren Abschnittes 8.3 wird jede Flasche beim weiteren Transport auf dem Abschnitt 8.5, der im Bezug auf die Quermittelebene QM spiegelbildlich zum Abschnitt 8.4 ausgebildet ist, wiederum zunehmend aufgerichtet. Die Flaschen 2 sind dabei auf dem Abschnitt 8.5 in der gleichen Weise wie in der Figur 4 dargestellt gehalten und werden dann im Bereich des Behälterauslaufs 8.2 aufrechtstehend und der Figur 3 entsprechend zwischen den Transportbändern 6 und 7 gehalten und zusätzlich abgestützt durch das Stützband 16 an den Transporteur 4 übergeben.

Es versteht sich, dass der Abstand zwischen der Transportbandlänge 6.1 und der Transportbandlänge 7.1 bzw. der Stützbandlängen 15.1 und 16.1 stets so gewählt ist, dass jede Flasche 2 sicher durch Festklemmen am Rumpf 2.3 auf der Transportstrecke 8 gehalten ist. Um dies zu erreichen sind die Transportbänder 6 und 7 sowie auch die Hilfsbänder 15 und 16 ausreichend elastisch ausgebildet. Weiterhin ist die Transportbandlänge 6.1 vorzugsweise durch ein oder mehrere, gefederte Abstützelemente an der Innenseite abgestützt.

Zur Anpassung der Vorrichtung 1 an Flaschen 2 mit unterschiedlichem Durchmesser ist bei der dargestellten Ausführungsform das Transportband 7 mit den zugehörigen Umlenkrädern 12 und 13 und den Umlenkrollen 14 sowie zusammen mit den beiden Stützbändern 15 und 16 und deren Umlenkrädern 17 bzw. 19 und Spannrollen 18 bzw. 20 in horizontaler Richtung und senkrecht zur Transportrichtung A einstellbar, wie dies mit dem Doppelpfeil B angedeutet ist.

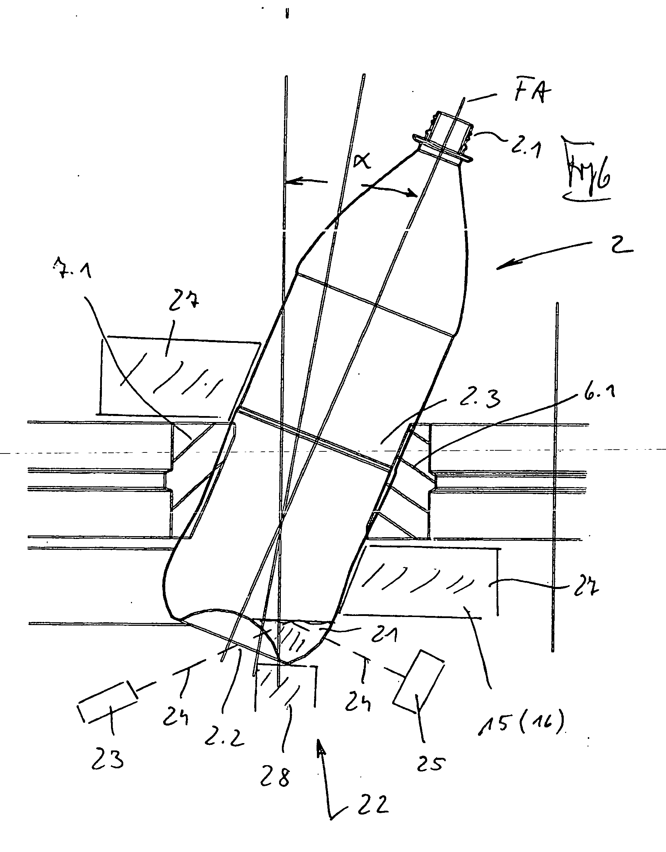

Am mittleren Bereich 8.3 der Transportstrecke 8 erfolgt die Inspektion der geneigten Flaschen 2. Diese sind hierfür mit einer genau dosierten Menge an Flüssigkeit 21 (z.B. steriles Wasser) gefüllt, die durch die Schrägstellung der jeweiligen Flasche an einem Randbereich des Bodens zusammenfließt, wie dies in den Figur 5 und 6 dargestellt ist. Durch ein Inspektionsmodul 22, welches ortsfest beispielsweise in der Mitte des Abschnittes 8.3 vorgesehen ist, werden jede vorbeibewegte, schräg gestellte Flasche 2 bzw. die in diese Flasche eingebrachte Flüssigkeit optoelektrisch, bevorzugt durch eine Spektralanalyse getestet bzw. analysiert. Das Inspektionsmodul 22 besteht hierfür bei der dargestellten Ausführungsform aus einer Lichtquelle 23, die einen gebündelten Lichtstrahl 24 aussendet, und aus einem Lichtdetektor 25, der ein Sensorsignal liefert, welches von der Intensität und/oder der spektralen Zusammensetzung des auf ihn auftreffenden Lichtstrahles 24 abhängig ist.

Die Flüssigkeit 21, die im einfachsten Fall steriles Wasser ist, wird in einer dem Behältereinlauf 8.1 in Transportrichtung A vorausgehenden Station 26 genau dosiert in jede Flasche 2 eingebracht, und zwar in der Art, dass in der Flasche 2 eventuell vorhandene Fremdstoffe oder Fremdkörper mit der Flüssigkeit 21 mitgeführt und/oder in dieser gelöst werden, sodass mit der von dem Inspektionsmodul 22 durchgeführten optoelektrischen Analyse bzw. Spektralanalyse der Flüssigkeit 21 das Vorhandensein oder Nichtvorhandensein von Fremdstoffen, Fremdkörpern oder dgl. in der jeweiligen Flasche 2 festgestellt werden kann.

Wie in den Figuren 5 und 6 dargestellt, ist die Lichtquelle 23 auf einer Seite der Transportstrecke, nämlich auf der von dem Transportband 7 gebildeten Seite der Transportstrecke 8 derart angeordnet, dass der Lichtstrahl 24 auf den konkav gewölbten Bodenabschnitt im Bereich des Bodenrandes gerichtet ist, und zwar bei der dargestellten Ausführungsform derart, dass der in die Flüssigkeit 21 eintretende Lichtstrahl 24 unter Totalreflexion an der Oberseite der Flüssigkeit 21 auf den an der anderen Seite der Transportstrecke 8 befindlichen Lichtdetektor 25 reflektiert wird.

Durch die Neigung der Flaschen 2 ist u.a. erreicht, dass sämtliche in einer Flasche eventuell vorhandene Fremdkörper, Fremdstoffe oder dergleichen Verunreinigungen in einer relativ geringen Menge an Flüssigkeit 21 konzentriert enthalten sind und somit eine Inspektion der Flaschen 2 mit hoher Zuverlässigkeit möglich ist.

Um eine eindeutige, reproduzierbare Schrägstellung der Flaschen 2 beim Passieren des Inspektionsmoduls 22 sicher zu stellen, sind dort, wie mit 27 und 28 in der Figur 5 angedeutet, zusätzliche Führungen vorgesehen, mit denen für jede Flasche 2 beim Passieren des Inspektionsmoduls 22 eine vorgegebene Winkellage exakt erreicht wird.

Die Erfindung wurde voranstehend an einem Ausführungsbeispiel beschrieben. Es versteht sich, dass zahlreiche Änderungen sowie Abwandlungen möglich sind, ohne dass dadurch der den Ansprüchen zugrunde liegende Erfindungsgedanke verlassen wird.

### Bezugszeichenliste

- 1: Vorrichtung
- 2: Flasche
- 2.1: Flaschenmündung
- 2.2: Flaschenboden
- 2.3: Flaschenrumpf
- 3, 4: Transporteur
- 5: Transporteur oder Transportelement
- 6,7: Transportband
- 6.1,7.1: Transportbandlänge
- 8: Transportstrecke
- 9: Umlenkrad
- 10: angetriebenes Rad
- 11: Umlenk- oder Spannrolle
- 12: Umlenkrad
- 13: angetriebenes Rad
- 14: Umlenk- oder Spannrolle
- 15, 16: Stützband
- 15.1, 16.1: Stützbandlänge
- 17: Umlenkrad
- 18: Spannrad
- 19: Umlenkrad
- 20: Spannrad
- 21: Testflüssigkeit
- 22: Inspektionsmodul
- 23: Lichtquelle
- 24: Lichtstrahl
- 25: Lichtdetektor
- 26: Station zum Einbringen der Testflüssigkeit 21
- 27, 28: Führung

- A: Transportrichtung
- B: Einstellung der Breite der Transportstrecke 8 bzw. 8a
- LM: vertikale Längsmittelebene
- QM: vertikale Quermittelebene

- α, β: Winkel

## Patentansprüche

1. Verfahren zur Inspektion von Flaschen oder dergleichen Behältern (2) aus einem transluzenten Werkstoff, bei welchem Verfahren die aufrecht stehend einem Transportelement einer Transportstrecke (8) zugeführten Behälter (2) beim Transport auf der Transportstrecke geschwenkt und im geschwenkten Zustand an wenigstens einer Inspektionsstation (22) vorbeibewegt werden, wobei das Transportelement wenigstens zwei jeweils eine geschlossene Schlaufe bildende und umlaufend angetriebene Transportbänder (6, 7) aufweist, deren jeweilige Innenseite annähernd in vertikaler Richtung orientert ist, und die an den Außenseiten ihrer Schlaufenschräge Behälteranlage- oder Klemmflächen bilden, die gegenüber der Vertikalen geneigt sind, zwischen denen die Behälter (2) während des Transports durch Klemmsitz gehalten sind, wobei das Schwenken der Behälter (2) **dadurch** erfolgt, dass die Behälteranlage- oder Klemmflächen dem Schwenkwinkel der Behälter (2) entsprechend geneigt sind und wobei die zwischen den Transportbändern (6, 7) eingespannten Behälter (2) beim Schwenken aus der aufrechten Stellung in die geschwenkte Stellung und/oder aus der geschwenkten Stellung in die aufrechte Stellung durch wenigstens ein zusätzliches Abstützelement (15) abgestützt werden

2. Verfahren nach Anspruch 1, **dadurch gekennzeichnet, dass** die Behälter (2) für die Inspektion beim Transport auf der Transportstrecke (8, 8a) mit ihrer Behälterachse (FA) in einer Ebene senkrecht zur Transportrichtung A geschwenkt werden.

3. Verfahren nach Anspruch 1 oder 2, **dadurch gekennzeichnet, dass** die Inspektion der Behälter (2) an der wenigstens einen Inspektionsstation (22) optoelektrisch unter Verwendung wenigstens einer Lichtquelle (23) und wenigstens eines optoelektrischen Sensorelementes, beispielsweise eines Lichtdetektors (25) oder einer Kameraanordnung erfolgt.

4. Verfahren nach Anspruch 3, **dadurch gekennzeichnet, dass** die Behälter (2) bei der Inspektion mit dem zu inspizierenden Behälterbereich im Lichtweg zwischen der wenigstens einen Lichtquelle (23) und dem wenigstens einen optoelektrischen Sensorelement (25) angeordnet sind.

5. Verfahren nach einem der vorhergehenden Ansprüche, **dadurch gekennzeichnet, dass** der zu inspizierende Behälterbereich ein Bodenbereich, vorzugsweise ein an eine Behälterumfangswand anschließender Bodenbereich ist.

6. Verfahren nach einem der vorhergehenden Ansprüche, **dadurch gekennzeichnet, dass** bei Behältern (2) mit einem an der Behälterunterseite konkav gewölbten Gehälterboden (2.2) der Lichtstrahl (24) der wenigstens einen Lichtquelle (23) auf den konkaven Bodenbereich der Behälter (2) gerichtet ist, so dass der den Behälter (2) durchdringende Lichtstrahl auf das seitlich vom Behälter (2) angeordnete Sensorelement (25) auftrifft.

7. Verfahren nach einem der vorhergehenden Ansprüche, **dadurch gekennzeichnet, dass** die Inspektion bei leeren Behältern erfolgt.

8. Verfahren nach einem der vorhergehenden Ansprüche, **dadurch gekennzeichnet, dass** die Inspektion bei zumindest teilweise gefüllten Behältern erfolgt.

9. Verfahren nach einem der vorhergehenden Ansprüche, **dadurch gekennzeichnet, dass** die Behälter (2) für die Inspektion jeweils mit einer genau dosierten Menge an Flüssigkeit, beispielsweise sterilem Wasser, gefüllt werden.

10. Verfahren nach einem der vorhergehenden Ansprüche, **dadurch gekennzeichnet, dass** der Lichtstrahl (24) der wenigstens einen Lichtquelle (23) unter Totalreflexion am Spiegel-der Flüssigkeit (21) auf das Sensorelement (25) reflektiert wird.

11. Verfahren nach einem der vorhergehenden Ansprüche, **dadurch gekennzeichnet, dass** aus der Helligkeit und/oder dem Spektrum des auf das Sensorelement (25) auftreffenden Lichtes ein dem Zustand des jeweiligen Behälters (2) entsprechendes Signal erzeugt wird.

12. Verfahren nach einem der vorhergehenden Ansprüche, **dadurch gekennzeichnet, dass** die Behälter (2) nach dem Inspizieren und während des Transportes auf der Transportstrecke (8, 8a) in ihre aufrechte Lage zurückbewegt werden.

13. Verfahren nach einem der vorhergehenden Ansprüche, **dadurch gekennzeichnet, dass** die Behälter (2) mit ihrer Behälterachse (FA) um einen Winkel (α) deutlich kleiner als 45°, beispielsweise um einen Winkel von etwa 20° - 25° geschwenkt werden.

14. Verfahren nach einem der vorhergehenden Ansprüche, **dadurch gekennzeichnet, dass** die Behälter (2) aus Glas oder einem transluzenten bzw. durchsichtigen Kunststoff, z.B. PET bestehen.

15. Vorrichtung zur Inspektion von Flaschen oder dergleichen Behältern (2) aus einem transluzenten Werkstoff, mit einer von einem Transportelement (5) gebildeten Transportstrecke (8), auf der die an einer Behälteraufgabe (8.1) aufrecht stehend zugeführten und an einer Behälterabgabe (8.2) aufrecht stehend abgeführten Behälter (2) wenigstens einmal in einer Ebene senkrecht zu einer Transportrichtung (A) der Transportstrecke (8) geschwenkt und im geschwenkten Zustand an wenigstens einer Inspektionsstation (22) vorbeibewegt werden, wobei das Transportelement (5) wenigstens zwei jeweils eine geschlossene Schlaufe bildende und umlaufend angetriebene Transportbänder (6, 7) aufweist, deren jeweilige Innenseite annähernd in vertikaler Richtung orientiert ist, und die an den Außenseiten ihrer Schlaufenschräge Behälteranlage- oder Klemmflächen bilden, die gegenüber der Vertikalen geneigt sind, zwischen denen die Behälter (2) während des Transports durch Klemmsitz gehalten sind, wobei die Behälteranlage- oder Klemmflächen dem Schwenkwinkel der Behälter (2) entsprechend geneigt sind, und im Bereich des Behältereinlaufs (8.1) und/oder des Behälterauslaufs (8.2) zusätzlich wenigstens ein Behälterabstützelement (15, 16) vorgesehen ist, das die zwischen den Transportbändern (6, 7) eingespannten Behälter (2) beim Schwenken aus der aufrechten Behälterstellung in die geschwenkte Stellung abstützen und/oder aus der geschwenkten Stellung in die aufrechte Stellung zurückbewegt.

16. Vorrichtung nach Anspruch 15, **dadurch gekennzeichnet, dass** sich das wenigstens eine Behälterabstützelement an einem der beiden Transportbänder (6, 7) befindet.

17. vorrichtung nach Anspruch 15 oder 16, **dadurch gekennzeichnet, dass** das wenigstens eine Behälterabstützelement (15, 16) von wenigstens einem zusätzlichen, endlos umlaufend angetriebenen Hilff oder Abstützband (15, 16) gebildet ist.

18. Vorrichtung nach Anspruch 17, **dadurch gekennzeichnet, dass** das wenigstens eine Hilfs- oder Abstützband (15, 16) gleichsinnig mit den Transportbändern (6, 7) sowie mit derselben Geschwindigkeit wie die Transportbänder (6, 7) angetrieben ist.

## Claims

1. Procedure for the inspection of bottles or similar containers (2) of a translucent material, in which procedure the containers (2), which are conveyed in the upright position to a transport element of a transport route (8) are tilted during transport on the transport route and are moved past at least one inspection station (22) in the tilted position, whereby the transport element has at least two continuously driven conveyor belts (6, 7), which form a closed loop, of which the inside is oriented almost vertically and which form slanted container receptacles or clamping areas on the outside of the loops, which are inclined away from vertical, between which the containers (2) are held by a clamping fit, whereby the tilting of the containers (2) is effected by the containers (2) being inclined correspondingly and whereby the containers (2), which are clamped between the conveyor belts (6, 7) are supported by at least one additional supporting element (15) while they are tilted from the upright position into the inclined position and/or from the inclined position into the upright position.

2. Procedure according to Claim 1, **characterised by** the containers (2) being tilted with their container axis (FA) in a perpendicular plain to the transport direction A for inspection during the transport on the transport route (8, 8a).

3. Procedure according to Claim 1 or 2, **characterised by** the inspection of the containers (2) being performed opto-electrically in at least one inspection station (22) by using at least one light source (23) and at least one opto-eletric sensor element, for instance a light detector (25) or a camera arrangement.

4. Procedure according to Claim 3, **characterised by** the containers (2) being arranged with the area of the container which must be inspected in the light path between at least one light source (23) and at least one opto-electric sensor element (25).

5. Procedure according to one of the preceding claims, **characterised by** the container area which must be inspected being a base area, preferably an area of the container circumference adjoining the base area.

6. Procedure according to one of the preceding claims, **characterised by** the light beam (24) of at least one light source (23) being aimed at the concave base area of the containers (2) with a concave container base (2.2), such that the light beam, which penetrates the container (2), impinges on the sensor element (25) which is located at the side of the container (2).

7. Procedure according to one of the preceding claims, **characterised by** the inspection being performed on empty containers.

8. Procedure according to one of the preceding claims, **characterised by** the inspection being performed on at least partially filled containers.

9. Procedure according to one of the preceding claims, **characterised by** the containers (2) being filled with an accurate dose of liquid, for instance sterile water.

10. Procedure according to one of the preceding claims, **characterised by** the light beam (24) of at least one light source (23) being reflected onto the sensor element (25) off the surface of the liquid as total internal reflection (21).

11. Procedure according to one of the preceding claims, **characterised by** a signal being generated as a result of the brightness and/or the spectrum of the light impinging on the sensor element (25), which corresponds to the condition of the relevant container (2).

12. Procedure according to one of the preceding claims, **characterised by** the containers (2) being moved back into the upright position after inspection and during transport on the transport route (8, 8a).

13. Procedure according to one of the preceding claims, **characterised by** containers (2) being tilted with their container axis (FA) through an angle significantly smaller than 45°, for instance through an angle of about 20° - 25°.

14. Procedure according to one of the preceding claims, **characterised by** the containers (2) consisting of glass or a translucent or transparent plastic, like for instance PET.

15. Device for the inspection of bottles or similar containers (2) of a translucent material, with a transport route (8) formed by a transport element (5) on which the containers (2), which are fed to a container receptacle (8.1) standing upright and the containers (2), which are discharged from a container discharge (8.2) standing upright, are tilted into a plane perpendicular to the transport direction (A) of the transport route (8) and are moved past at least one inspection station (22) in this tilted position, whereby the transport element (5) has at least two continuously driven conveyor belts (6, 7) which form a closed loop, of which the inside is oriented almost vertically and which form slanted container receptacles or clamping areas on the outside of the loops, which are inclined away from the vertical, between which the containers (2) are held by a clamping fit, whereby the container receptacles or clamping areas of the containers (2) are tilted correspondingly and provision is made for at least one additional supporting element (15, 16) in the area of container feed-in (8.1) and container discharge (8.2) which supports the containers (2), which are clamped between the conveyor belts (6, 7), while they are tilted from the upright position into the inclined position and/or moves them back from the inclined position into the upright position.

16. Device according to Claim 15, **characterised by** at least one container supporting element being present on one of the conveyor belts 8, 7).

17. Device according to Claim 15 or 16, **characterised by** at least one container supporting element (15, 16) being formed by at least one additional continuously driven auxiliary or supporting conveyor (15,16).

18. Device according to Claim 17, **characterised by** at least one auxiliary or supporting belt (15, 16) being driven in the same direction of the transport conveyors (6, 7) and at the same speed as the transport conveyors (6, 7).

## Revendications

1. Procédé pour l'inspection de bouteilles ou récipients (2) similaires réalisés dans un matériau translucide, dans lequel procédé les récipients (2), acheminés en position verticale vers un élément de transport d'une voie de transport (8), sont amenés à pivoter pendant le transport sur la voie de transport et sont déplacés, dans la position pivotée, le long d'au moins un poste d'inspection (22), l'élément de transport comportant au moins deux bandes transporteuses (6, 7), actionnées en rotation et formant chacune une boucle fermée, dont la face intérieure de chacune est orientée sensiblement dans la direction verticale et qui, sur la face extérieure de leurs boucles, forment des surfaces obliques de contact ou de serrage des récipients, lesquelles sont inclinées par rapport à la verticale et entre lesquelles les récipients (2) sont maintenus par un ajustement serré pendant le transport, sachant que le pivotement des récipients (2) est obtenu par le fait que les surfaces de contact ou de serrage des récipients sont inclinées de manière correspondante à l'angle de pivotement des récipients (2), et sachant que les récipients (2), bloqués entre les bandes transporteuses (6, 7), sont supportés par au moins un élément de support (15) supplémentaire pendant leur pivotement hors de la position verticale dans la position pivotée et/ou hors de la position pivotée dans la position verticale.

2. Procédé selon la revendication 1, **caractérisé en ce que**, pour l'inspection pendant le transport sur la voie de transport (8, 8a), les récipients (2) pivotent avec leur axe (FA) dans un plan perpendiculaire à la direction de transport (A).

3. Procédé selon la revendication 1 ou 2, **caractérisé en ce que** l'inspection des récipients (2) au niveau dudit au moins un poste d'inspection (22) est effectuée par voie optoélectrique moyennant l'utilisation d'au moins une source lumineuse (23) et d'au moins un élément capteur optoélectrique, tel qu'un détecteur de lumière (25) ou un système de caméra.

4. Procédé selon la revendication 3, **caractérisé en ce que**, pendant l'inspection, les récipients (2) sont disposés avec leur zone à inspecter dans la trajectoire de la lumière entre ladite au moins une source lumineuse (23) et ledit au moins un élément capteur (25) optoélectrique.

5. Procédé selon l'une quelconque des revendications précédentes, **caractérisé en ce que** la zone à inspecter des récipients est une zone de fond, de préférence une zone de fond adjacente à une paroi périphérique du récipient.

6. Procédé selon l'une quelconque des revendications précédentes, **caractérisé en ce que**, en présence de récipients (2) avec un fond (2.2) à courbure concave sur la face inférieure du récipient, le rayon lumineux (24) de ladite au moins une source lumineuse (23) est dirigé sur la zone de fond concave des récipients (2), de telle sorte que le rayon lumineux traversant le récipient (2) est projeté sur l'élément capteur (25), disposé latéralement par rapport au récipient (2).

7. Procédé selon l'une quelconque des revendications précédentes, **caractérisé en ce que** l'inspection est effectuée sur des récipients vides.

8. Procédé selon l'une quelconque des revendications précédentes, **caractérisé en ce que** l'inspection est effectuée sur des récipients remplis au moins en partie.

9. Procédé selon l'une quelconque des revendications précédentes, **caractérisé en ce que** pour l'inspection, les récipients (2) sont remplis chacun avec une quantité de liquide dosée avec précision, par exemple de l'eau stérile.

10. Procédé selon l'une quelconque des revendications précédentes, **caractérisé en ce que** le rayon lumineux (24) de ladite au moins une source lumineuse (23) est réfléchi sur l'élément capteur (25) moyennant la réflexion totale sur le niveau du liquide (21).

11. Procédé selon l'une quelconque des revendications précédentes, **caractérisé en ce que** la luminosité et/ou le spectre de la lumière projetée sur l'élément capteur (25) génère un signal correspondant à l'état du récipient (2) respectif.

12. Procédé selon l'une quelconque des revendications précédentes, **caractérisé en ce que** les récipients (2), après l'inspection et pendant le transport sur la voie de transport (8, 8a), sont ramenés dans leur position verticale.

13. Procédé selon l'une quelconque des revendications précédentes, **caractérisé en ce que** les récipients (2) sont amenés à pivoter avec leur axe (FA) selon un angle (α) nettement inférieur à 45°, par exemple un angle d'environ 20° à 25°.

14. Procédé selon l'une quelconque des revendications précédentes, **caractérisé en ce que** les récipients (2) sont réalisés en verre ou dans une matière plastique translucide ou transparente, tel que le PET.

15. Dispositif pour l'inspection de bouteilles ou récipients (2) similaires réalisés dans un matériau translucide, comportant une voie de transport (8) formée par un élément de transport (5), sur laquelle les récipients (2), acheminés en position verticale au niveau d'un poste de réception (8.1) et évacués en position verticale au niveau d'un poste d'évacuation (8.2), sont amenés à pivoter au moins une fois dans un plan perpendiculaire à une direction de transport (A) de la voie de transport (8) et sont déplacés, dans la position pivotée, le long d'au moins un poste d'inspection (22), l'élément de transport (5) comportant au moins deux bandes transporteuses (6, 7), actionnées en rotation et formant chacune une boucle fermée, dont la face intérieure de chacune est orientée sensiblement dans la direction verticale et qui, sur la face extérieure de leurs boucles, forment des surfaces obliques de contact ou de serrage des récipients, lesquelles sont inclinées par rapport à la verticale et entre lesquelles les récipients (2) sont maintenus par un ajustement serré pendant le transport, sachant que les surfaces de contact ou de serrage des récipients sont inclinées de manière correspondante à l'angle de pivotement des récipients (2) et, dans la zone de réception des récipients (8.1) et/ou dans la zone d'évacuation des récipients (8.2), il est prévu en plus au moins un élément de support des récipients (15, 16), par lequel les récipients (2), bloqués entre les bandes transporteuses (6, 7), sont supportés pendant leur pivotement hors de la position verticale dans la position pivotée et/ou sont ramenés hors de la position pivotée dans la position verticale.

16. Dispositif selon la revendication 15, **caractérisé en ce que** ledit au moins un élément de support des récipients se situe sur l'une des deux bandes transporteuses (6, 7).

17. Dispositif selon la revendication 15 ou 16, **caractérisé en ce que** ledit au moins un élément de support des récipients (15, 16) est formé par au moins une bande auxiliaire ou bande de support (15, 16) supplémentaire, actionnée en rotation en continu.

18. Dispositif selon la revendication 17, **caractérisé en ce que** ladite au moins une bande auxiliaire ou bande de support (15, 16) est actionnée dans le même sens que les bandes transporteuses (6, 7) et avec la même vitesse que les bandes transporteuses (6, 7).
